# EUROPEAN PATENT APPLICATION

(11) **EP 4 825 613 A1**
(43) Date of publication of application: **21.10.2026**
(21) Application number: 25731177.9
(22) Date of filing: 03.02.2025
(51) Int. Cl.: B60C 19/00, B60C 9/00, B60C 9/18

(54) **PNEUMATIC TIRE**

(30) Priority: 12.12.2023 KR 20230179785
(71) Applicant: HANKOOK TIRE & TECHNOLOGY CO., LTD, Gyeonggi-do 13494 (KR)
(72) Inventor: LEE, Jinyoung, Daejeon 34127 (KR)
(74) Representative: Witte, Weller & Partner Patentanwälte mbB
(86) International application number: PCT/IB2025/051115
(87) International publication number: WO 2025/126196

(57) **Abstract**

Disclosed are pneumatic a tire. A pneumatic tire according to an embodiment of the present disclosure includes a carcass disposed to extend from an inner side of a tread through a sidewall to a bead, a belt portion disposed on a radially outer side of the carcass inside the tread, a band portion disposed on a radially outer side of the belt portion inside the tread and a noise damper attached to a radially inner surface of the tread, wherein the band portion includes a first band layer disposed on the radially outer side of the belt portion, and a second band layer disposed on the radially outer side of the first band layer, the second band layer extending from one end of the first band layer in a width direction of the tread to at least a portion of the noise damper.

## Description

### BACKGROUND

### Field

The present disclosure relates to a pneumatic tire, and more particularly, to a pneumatic tire capable of reducing the noise generated during vehicle driving and improving its durability.

### Description of the Related Art

Generally, when a pneumatic tire travels at high speeds, vibration and noise are generated due to friction or impact between the tread and the road surface. This noise is amplified within the tire cavity, causing discomfort to the driver and passengers. Accordingly, various measures have been researched to solve such tire noise problems.

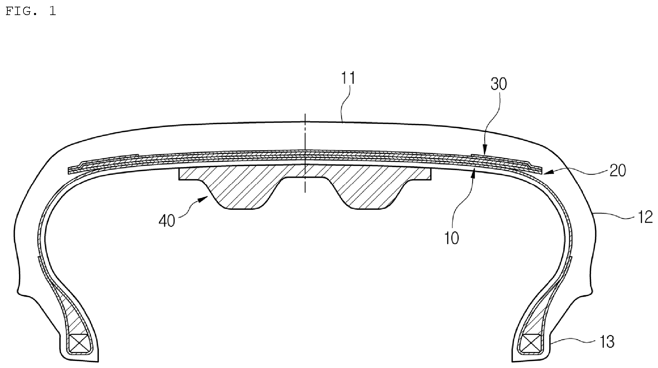

Figure 1 is a cross-sectional view illustrating a conventional pneumatic tire for noise reduction. Referring to Figure 1, the conventional pneumatic tire includes: a carcass 10 extending from the inside of a tread 11 through a sidewall 12 to a bead 13; a belt portion 20 disposed on the radially outer side of the carcass 10 inside the tread 11; a band portion 30 disposed on the radially outer side of the belt portion 20; and a noise damper 40 attached at the radially inner-center portion of the tread 11 and extending in the circumferential direction of the tire.

In this pneumatic tire, the band portion 30 is formed as a single band layer over the entire width, while only the portions at both widthwise ends are formed as two band layers. The two band layers at both ends of the band portion 30 are positioned with a predetermined gap from the noise damper 40. That is, there is no overlap along the circumferential direction of the tire between the two band layers of the band portion 30 and the noise damper 40.

Accordingly, if the width of the noise damper 40 is made large, the width of the two band layers at both ends of the band portion 30 becomes too narrow, thereby failing to prevent the belt portion 20 from lifting off the carcass 10 due to centrifugal force during high-speed driving, which reduces tire durability.

In addition, forming the entire band portion 30 as two band layers to ensure durability may cause another problem, namely a significant increase in tire weight, which leads to reduced fuel efficiency.

### SUMMARY

The present embodiment is intended to provide a pneumatic tire that can reduce tire noise generated by friction or impact between the tread and the road surface and amplified within the tire cavity.

The present embodiment is intended to provide a pneumatic tire capable of suppressing the lifting of the belt portion due to centrifugal force during high-speed vehicle driving while minimizing weight increase, and improving the durability and cornering stiffness of the tire

A pneumatic tire according to an embodiment of the present disclosure includes a carcass disposed to extend from an inner side of a tread through a sidewall to a bead, a belt portion disposed on a radially outer side of the carcass inside the tread, a band portion disposed on a radially outer side of the belt portion inside the tread and a noise damper attached to a radially inner surface of the tread, wherein the band portion includes a first band layer disposed on the radially outer side of the belt portion, and a second band layer disposed on the radially outer side of the first band layer, the second band layer extending from one end of the first band layer in a width direction of the tread to at least a portion of the noise damper.

The band portion is formed by winding a band ply provided with a constant width, the first band layer is provided by winding the band ply at a pitch of 100% to 105% of the width of the band ply and the second band layer is provided by winding the band ply at a pitch of 45% to 90% of the width of the band ply.

The second band layer includes: a full overlap portion provided by winding the band ply at a pitch of 45% to 55% of the width of the band ply and a partial overlap portion provided by winding the band ply at a pitch of 65% to 90% of the width of the band ply.

The partial overlap portion includes a first region extending from the full overlap portion in a tire axial direction to one end side of the noise damper and a second region continuous with the first region, the second region extending from the one end side of the noise damper in the tire axial direction and overlapping with at least a portion of the noise damper.

The first region is provided with a width of 5% to 25% of the width of the belt portion based on the width direction of the tread; and the second region is provided with a width of 2% to 30% of the width of the belt portion based on the width direction of the tread.

The full overlap portion is provided with a width of 10% to 25% of the tread ground contact width based on the width direction of the tread; and the partial overlap portion is provided with a width of 7% to 40% of the tread ground contact width based on the width direction of the tread.

The belt portion includes a first belt layer disposed on the radially outer side of the carcass and a second belt layer disposed on the radially outer side of the first belt layer.

The belt portion includes a first belt layer disposed on the radially outer side of the carcass and a second belt layer disposed on the radially outer side of the first belt layer.

The noise damper is provided with a width of 40% to 70% of the tread ground contact width based on the width direction of the tread.

The noise damper is formed to extend along the circumferential direction of the tread.

The noise damper is formed to be divided at equal intervals along the circumferential direction of the tread.

According to the pneumatic tire according to the present embodiment, it is possible to reduce tire noise generated by friction or impact between the tread and the road surface and amplified within the tire cavity, thereby providing a comfortable driving environment for the driver and passengers.

According to the pneumatic tire according to the present embodiment, it is possible to suppress the lifting (floating) of the belt assembly while minimizing weight increase, and can enhance cornering stiffness, thereby improving the durability and running stability of the tire.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a cross-sectional view illustrating a conventional pneumatic tire for noise reduction.
FIG. 2 is a cross-sectional view illustrating a key part of the pneumatic tire according to an embodiment of the present invention.
FIG. 3 is a cross-sectional view illustrating the pneumatic tire according to an embodiment of the present invention.
FIG. 4 is a cross-sectional view illustrating the pneumatic tire according to an embodiment of the present invention.
FIG. 5 is a side view illustrating the pneumatic tire according to an embodiment of the present invention.

### DETAILED DESCRIPTION OF THE EMBODIMENT

Hereinafter, the exemplary embodiments of the present disclosure will be described with reference to the accompanying drawings and the exemplary embodiments. Scales of components illustrated in the accompanying drawings are different from the real scales for the purpose of description, and thus the scales are not limited to those illustrated in the drawings.

Hereinafter, embodiments of the present disclosure will be described in detail with reference to the accompanying drawings. The following embodiments are presented to sufficiently provide the spirit of the present disclosure to those skilled in the art to which it pertains. The present disclosure is not limited to the embodiments presented herein and may be realized in other aspects. The constituent elements irrelevant to the description of the present disclosure will be omitted from the drawings to clearly describe the present disclosure. The sizes of the constituent elements may be somewhat exaggerated for purposes of understanding.

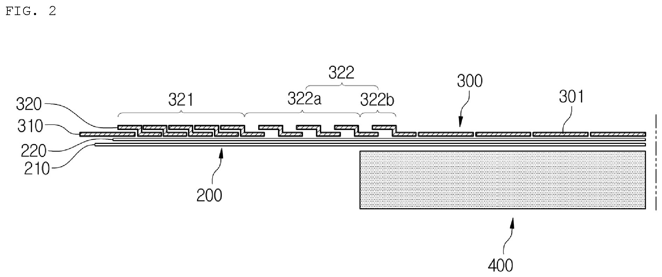

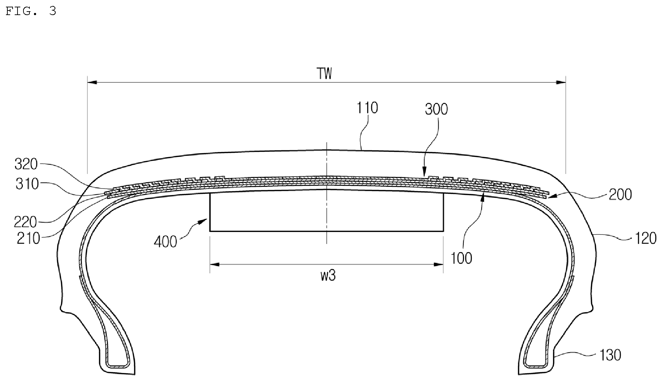

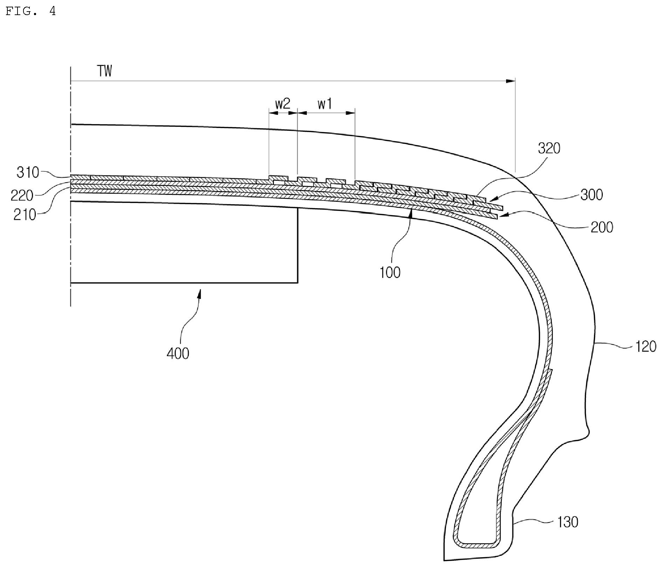

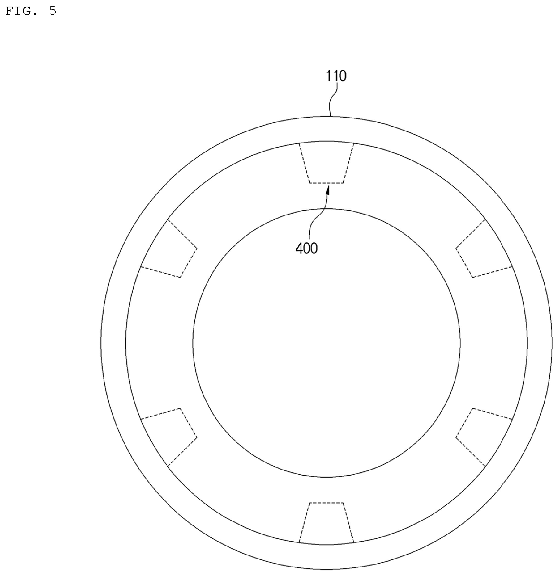

FIG. 2 is a cross-sectional view illustrating a key part of the pneumatic tire according to an embodiment of the present invention, FIG. 3 and 4 are cross-sectional views illustrating the pneumatic tire according to an embodiment of the present invention, and FIG. 5 is a side view illustrating the pneumatic tire according to an embodiment of the present invention.

As shown in FIGS. 2 to 5, the pneumatic tire according to the present invention may include a carcass 100, a belt assembly 200, a band assembly 300, and a noise damper 400.

The carcass 100 is a cord layer that forms the skeleton of the tire. As shown in FIG. 3, it is formed to extend from the tread 110 to both sides, passing through the sidewall 120 and reaching the bead 130. It supports the air pressure inside the tire and the entire vehicle load and is deformable by road surface impacts during vehicle running.

More specifically, the carcass 100 is disposed inside the tire to form the basic shape of the tire and support the vehicle load. To this end, the carcass 100 may include a plurality of layers made of organic fibers and/or inorganic fibers that can satisfy the strength and flexibility required for the tire.

Although not shown, the carcass 100 may include an inner liner layer disposed radially inward of the carcass 100 to protect the interior space of the tire from air and moisture. Furthermore, as shown in FIG. 3, the carcass 100 may be formed such that the sidewall 120 and the bead 130 are symmetrically disposed on both sides with respect to the center of the tread 110.

The tread 110 forms the surface that contacts the road and provides the vehicle's traction. To this end, the tread 110 can be formed in various shapes and materials to ensure sufficient traction depending on road conditions. For example, the tread 110 may be formed of a thick rubber layer, and may be composed of highly cut-resistant, shock-resistant, and abrasion-resistant rubber to protect the carcass 100, belt assembly 200, and band assembly 300 and to extend the tire's running life. In addition, the tread 110 may include grooves of various patterns provided on the contact surface to improve grip.

Furthermore, the tread contact width TW, as referred to herein, means the width in the tire axial direction of the contact surface where the tread 110 contacts the ground when the pneumatic tire according to an embodiment of the present invention is assembled on a standard rim, inflated with standard internal pressure, and loaded with a standard load. The width direction of the tread is the same as the width or axial direction of the tire.

The sidewall 120 is provided between the tread 110 and the bead 130 to protect the carcass 100 and improve riding comfort through flexible flexing movement. To this end, the sidewall 120 can be formed in various shapes and materials to have sufficient flexibility. In addition, various information such as the type, size structure, pattern, manufacturer, and brand name of the tire can be displayed on the sidewall 120.

The bead 130 is located on the inner circumference of the tire and is tightly attached to the rim to secure the tire to the vehicle's wheel. To this end, the bead 130 can be formed in various shapes and materials, including a bead wire (not shown) and a bead core (not shown), to ensure the tire is stably fixed to the rim. Furthermore, the bead 130 may be provided to give a slight tightness to the rim, preventing the tire from coming off the rim even when the tire pressure rapidly decreases while driving.

The belt assembly 200 is disposed radially outward of the carcass 100 inside the tread 110 to increase the strength of the tread 110 and protect the carcass 100 by preventing impacts received by the tread 110 and cracks generated in the tread 110 from being transmitted to the carcass 100. To this end, the belt assembly 200 may include a plurality of belt layers formed by cords such as steel, textile, or aramid fiber wound in the circumferential direction of the tire. Also, as shown in FIG. 3, the belt assembly 200 may be formed symmetrically on both sides with respect to the center of the tread 110 width.

More specifically, the belt assembly 200 may include a first belt layer 210 disposed radially outward of the carcass 100 and a second belt layer 220 disposed radially outward of the first belt layer 210. That is, the belt assembly 200 may be formed by layering two belt layers 210, 220. It is not limited to this, and heavy-duty pneumatic tires applied to relatively heavy vehicles such as trucks or buses may also include a belt assembly 200 in which a plurality of belt layers exceeding two are layered.

Furthermore, the first belt layer 210 may be formed slightly longer compared to the second belt layer 220 so that the end portion of the second belt layer 220 can be seated on the first belt layer 210, as shown in FIG. 4. Although not shown, the first belt layer 210 may also be formed with the same length as the second belt layer 220, so that the end portion of the first belt layer 210 is located at the same position as the end portion of the second belt layer 220.

In addition, the width of the belt assembly 200, as referred to herein, means the width of the first belt layer 210, which has the widest width among the plurality of belt layers 210, 220 with respect to the tread 110 width direction, as described above.

The band assembly 300 is disposed radially outward of the belt assembly 200 inside the tread 110 to suppress the floating of the belt assembly 200 from the carcass 100 due to centrifugal force during high-speed vehicle running, thereby enhancing the tire's durability. To this end, the band assembly 300 can be provided by winding a band ply 301, formed of organic fibers such as polyester, nylon, rayon, or aramid and having a constant width, in the circumferential direction of the tire at a constant pitch.

More specifically, the band assembly 300 may include a first band layer 310 disposed radially outward of the belt assembly 200 and a second band layer 320 disposed radially outward of the first band layer 310, extending from one end of the first band layer 310 in the tire axial direction up to at least a portion of the noise damper 400.

That is, as shown in FIG. 4, the first band layer 310 is entirely disposed radially outward of the second belt layer 220, and the second band layer 320 is disposed radially outward of the first band layer 310. The second band layer 320 may be provided on both sides to overlap with at least a portion of the noise damper 400 from one end side of the first band layer 310 in the tire axial direction.

To this end, the first band layer 310 may be provided by winding the band ply 301, formed with a constant width as described above, in the tire circumferential direction at a pitch of 100% to 105% of the band ply 301 width. That is, as shown in FIG. 2, the first band layer 310 can be provided such that the band plies 301 are adjacent to each other in the tire width direction to form a single layer overall, or the band plies 301 are in close contact with each other in the tire width direction to form a single layer.

Furthermore, the second band layer 320 may be provided by winding the band ply 301 in the tire circumferential direction at a pitch of 45% to 90% of the band ply 301 width. That is, as shown in FIG. 2, the second band layer 320 can be formed by having the band plies 301 partially overlap with adjacent band plies 301 in the tire width direction, thus forming an additional single layer on the first band layer 310.

Accordingly, in the pneumatic tire according to the present invention, the second band layer 320 is not manufactured separately and adhered/layered onto the first band layer 310 but can be manufactured at once by winding the band ply 301 of a constant width, which forms the band assembly 300, in the tire circumferential direction while changing the pitch.

Although FIG. 2 shows the end portion of the first band layer 310 extending long beyond the belt assembly 200, the band assembly 300 is not limited to this. The overall length of the band assembly 300 may be equal to or shorter than the belt assembly 200 so that the end portion of the first band layer 310 or the second band layer 320 is positioned on the belt assembly 200.

Furthermore, the second band layer 320 may include a Fully Overlapped Section 321, which is provided at a preset distance from one end side of the band assembly 320 to one end side of the noise damper 400 in the tire axial direction, and a Partially Overlapped Section 322, which extends from the fully overlapped section 321 up to at least a portion of the noise damper 400 in the tire axial direction.

Here, the width of the fully overlapped section 321 may be 10% to 25% of the tread contact width TW, based on the width direction of the tread 110. The width of the partially overlapped section 322 may be 7% to 40% of the tread contact width TW, based on the width direction of the tread 110.

In addition, the fully overlapped section 321 may be provided by winding the band ply 301 onto the belt assembly 200 at a pitch of 45% to 55% of the band ply 301 width. The partially overlapped section 322 may be provided by winding the band ply 301 onto the belt assembly 200 at a pitch of 65% to 90% of the band ply 301 width.

That is, as shown in FIG. 2, the fully overlapped section 321 forms the second band layer 320 with parts of the band plies 301 placed closely adjacent to each other, and the partially overlapped section 322 forms the second band layer 320 with parts of the band plies 301 placed separated by a certain distance from each other.

Accordingly, the fully overlapped section 321 is formed to be heavier compared to the partially overlapped section 322, and it can sufficiently suppress the lifting of both end sides of the belt assembly 200 from the carcass 100 due to centrifugal force during high-speed vehicle running. In particular, since the lifting of the belt assembly 200 from the carcass 100 due to centrifugal force during high-speed vehicle running mainly starts at both end sides of the belt assembly 200, the lifting of the belt assembly 200 from the carcass 100 can be more effectively prevented by the fully overlapped section 321 provided at both end sides of the belt assembly 200.

Furthermore, the partially overlapped section 322 is formed to be lighter compared to the fully overlapped section 321, which prevents the overall weight of the band assembly 300 from increasing due to the second band layer 320 being provided only with the relatively heavy fully overlapped section 321. In this case, the widths of the fully overlapped section 321 and the partially overlapped section 322 can be determined considering the noise and durability characteristics of the pneumatic tire according to the present invention. For example, the partially overlapped section 322 may be provided over the entire band assembly 300, excluding the fully overlapped section 321.

Accordingly, the pneumatic tire according to the present invention can minimize the increase in weight compared to conventional pneumatic tires for noise reduction, suppress the lifting of the belt assembly 200 from the carcass 100 due to centrifugal force, and improve the cornering stiffness by having the second band layer 320 partially overlap with the noise damper 400, thereby further enhancing tire durability and running stability.

Meanwhile, the partially overlapped section 322 can be divided into a first region 322a extending from the inner end portion of the fully overlapped section 321 to one end side of the noise damper 400 in the tire axial direction, and a second region 322b extending from the first region 322a to overlap with at least a portion of the noise damper 400 in the tire axial direction, as shown in FIG. 2. Here, the width w1 of the first region 322a, based on the tire axial direction, may be 5% to 25% of the belt assembly 200 width. The width w2 of the second region 322b, based on the tire axial direction, may be 2% to 30% of the belt assembly 200 width.

The division of the partially overlapped section 322 and the tire axial length of each region are intended to determine the overall length of the partially overlapped section 322 while simultaneously determining the separation distance between the fully overlapped section 321 and the noise damper 400 in the tire axial direction, and can be determined within the above range considering the noise and/or durability characteristics of the pneumatic tire according to the present invention.

The Noise Damper 400, as shown in FIG. 3 and FIG. 4, is attached to the radially inner surface of the tread 110 to reduce the tire noise generated by friction or impact between the tread 110 and the road surface and amplified within the tire's cavity. To this end, the noise damper 400 can be provided in various materials, including foamed rubber, foamed synthetic resin, and sponge, and in various shapes, including foamed bodies and porous structures.

In addition, the noise damper 400 is provided such that its center of gravity is on the same line as the center of the tread 110 in the tire circumferential direction, thereby balancing the load on the tire and maintaining dynamic equilibrium, which prevents separation from the tread 110 due to weight eccentricity during high-speed running.

Furthermore, the noise damper 400 is illustrated as having a rectangular cross-section, but is not limited to this, and can be provided in various shapes and sizes according to its noise reduction performance and the overall shape and specification of the tire.

Also, the noise damper 400 may be provided in an overall ring shape by being extended long along the circumferential direction of the tread 110. Alternatively, as shown in FIG. 5, the noise damper 400 may be provided in a plurality of pieces by being divided and formed at equal intervals along the circumferential direction of the tread 110.

In addition, as shown in FIG. 3, the width w3 of the noise damper 400, based on the width direction of the tread 110, may be 40% to 70% of the tread contact width TW.

While the specific embodiments of the pneumatic tire according to the present disclosure have been described above, it is apparent that various modifications may be made without departing from the scope of the present disclosure.

Therefore, the scope of the present disclosure should not be limited to the described embodiments and should be defined by not only the claims to be described below, but also those equivalent to the claims.

That is, it should be understood that the aforementioned exemplary embodiments are described for illustration in all aspects and are not limited, and the scope of the present disclosure shall be represented by the claims to be described below, and it should be construed that all of the changes or modified forms induced from the meaning and the scope of the claims, and an equivalent concept thereto are included in the scope of the present disclosure.

## Claims

1. A pneumatic tire comprising:
a carcass disposed to extend from an inner side of a tread through a sidewall to a bead;
a belt portion disposed on a radially outer side of the carcass inside the tread;
a band portion disposed on a radially outer side of the belt portion inside the tread; and
a noise damper attached to a radially inner surface of the tread;
wherein the band portion includes:
a first band layer disposed on the radially outer side of the belt portion, and
a second band layer disposed on the radially outer side of the first band layer, the second band layer extending from one end of the first band layer in a width direction of the tread to at least a portion of the noise damper.

2. The pneumatic tire of claim 1,
wherein the band portion is formed by winding a band ply provided with a constant width; the first band layer is provided by winding the band ply at a pitch of 100% to 105% of the width of the band ply; and the second band layer is provided by winding the band ply at a pitch of 45% to 90% of the width of the band ply.

3. The pneumatic tire of claim 2,
wherein the second band layer includes: a full overlap portion provided by winding the band ply at a pitch of 45% to 55% of the width of the band ply; and a partial overlap portion provided by winding the band ply at a pitch of 65% to 90% of the width of the band ply.

4. The pneumatic tire of claim 3,
wherein the partial overlap portion includes: a first region extending from the full overlap portion in a tire axial direction to one end side of the noise damper; and a second region continuous with the first region, the second region extending from the one end side of the noise damper in the tire axial direction and overlapping with at least a portion of the noise damper.

5. The pneumatic tire of claim 4,
wherein the first region is provided with a width of 5% to 25% of the width of the belt portion based on the width direction of the tread; and the second region is provided with a width of 2% to 30% of the width of the belt portion based on the width direction of the tread.

6. The pneumatic tire of claim 3,
wherein the full overlap portion is provided with a width of 10% to 25% of the tread ground contact width based on the width direction of the tread; and the partial overlap portion is provided with a width of 7% to 40% of the tread ground contact width based on the width direction of the tread.

7. The pneumatic tire of claim 1,
wherein the belt portion includes: a first belt layer disposed on the radially outer side of the carcass; and a second belt layer disposed on the radially outer side of the first belt layer.

8. The pneumatic tire of claim 1,
wherein the noise damper is provided with a width of 40% to 70% of the tread ground contact width based on the width direction of the tread.

9. The pneumatic tire of claim 1,
wherein the noise damper is formed to extend along the circumferential direction of the tread.

10. The pneumatic tire of claim 1,
wherein the noise damper is formed to be divided at equal intervals along the circumferential direction of the tread.
